# EUROPEAN PATENT SPECIFICATION

(11) **EP 2 567 852 B1**
(45) Date of publication and mention of the grant of the patent: **10.12.2014**
(21) Application number: 12181307.5
(22) Date of filing: 22.08.2012
(51) Int. Cl.: B60K 37/00, B60K 37/02, B60K 37/04, B62D 1/16, B60R 11/00, B60R 11/06

(54) **Tractor center control console for supporting a steering column assembly**
Traktorzentrumssteuerkonsole zur Unterstützung einer Lenksäulenanordnung
Console de commande centrale de tracteur destinée à supporter un ensemble de colonne de direction

(30) Priority: 08.09.2011 US 201113228206
(43) Date of publication of application: 13.03.2013
(73) Proprietor: DEERE & COMPANY, Moline, Illinois 61265-8098 (US)
(72) Inventor: Goodnight, Marlin L., Martinez, GA Georgia 30907 (US)
(74) Representative: Dehnhardt, Florian Christopher

(56) References cited:
- AU-B2- 512 521
- GB-A- 152 193
- US-A- 4 447 860
- US-A- 5 678 649
- US-A1- 2005 028 635

## Description

The present invention relates to a tractor center control console for supporting a steering column assembly.

US 5 678 649 A discloses a steering console connected to an engine hood to form an engine accommodating space with the engine hood. The steering console has a right side wall, a left side wall, a front wall interconnecting one vertical edge of the right side wall and one vertical edge of the left side wall, a control panel interconnecting upper edges of the right side wall, left side wall and front wall, and a steering column projecting upward from the control panel. The right side wall, left side wall, front wall and steering column are integrally formed of plastics to constitute the steering console. The front wall defines air flow guides, the side walls define partition plates, and the control panel defines an indicator support flange

Utility tractors may have center control consoles that include several support castings and brackets that are used to support and limit deflection of a steering column assembly in response to loads or impact forces. However, side-to-side or front-to-back deflection of a center control console in response to a 250 pound load at 80 °C may exceed 50 mm where a steering column assembly is mounted. A tractor center control console is needed that can withstand loads or impact forces to the steering column assembly, and limit or reduce deflection of the steering column assembly.

Center control consoles also may be used to mount other components such as an instrument panel, key switch panel, and tractor hood hinge. Because of the relatively large number of parts, significant assembly time is required to build a center control console in place on the tractor and to attach components including heat shields and noise reduction materials. Thus, a tractor center control console is needed having a lower number of parts and shorter assembly time.

Utility tractors also may have electronic components such as control units for the engine and/or transmission that must be connected via wiring harnesses to other components on the tractor. There is a need to mount electronic components on a tractor where they are accessible for service, optimize routing of wiring harnesses, and protect and shield the electronic components from engine heat, moisture, and dirt.

These and other objects are achieved by the present invention, wherein a tractor center control console for supporting a steering column assembly is provided. The tractor center control console comprises an one-piece molded plastic pedestal. A steering column assembly is mounted to the one-piece plastic pedestal and solely supported by the one-piece plastic pedestal. A removable cowl covers at least part of the one-piece plastic pedestal. A plurality of electronic components is housed in the one-piece plastic pedestal and covered by the removable cowl.

The tractor center control console can reduce or minimize deflection of the steering column assembly and has a minimal number of parts and short assembly time. Additionally, the tractor center control console mounts electronic components where they are accessible for service, optimizes routing of wiring harnesses, and protects and shields the electronic components from engine heat, moisture, and dirt.

For a complete understanding of the objects, techniques, and structure of the invention reference should be made to the following detailed description and accompanying drawings, wherein similar components are designated by identical reference numerals:
- Fig. 1: is a right front perspective view of a tractor center control console according to an exemplary embodiment of the invention,
- Fig. 2: is a right front perspective view of the tractor center control console of Fig. 1 with a removed cowl,
- Fig. 3: is an exploded right front perspective view of the tractor center control console of Fig. 2,
- Fig. 4: is a partially exploded left front perspective view of the tractor center control console of Fig. 3, and
- Fig. 5: is a front view of the tractor center control console of Fig. 2 supporting a hinge mechanism for a tractor hood.

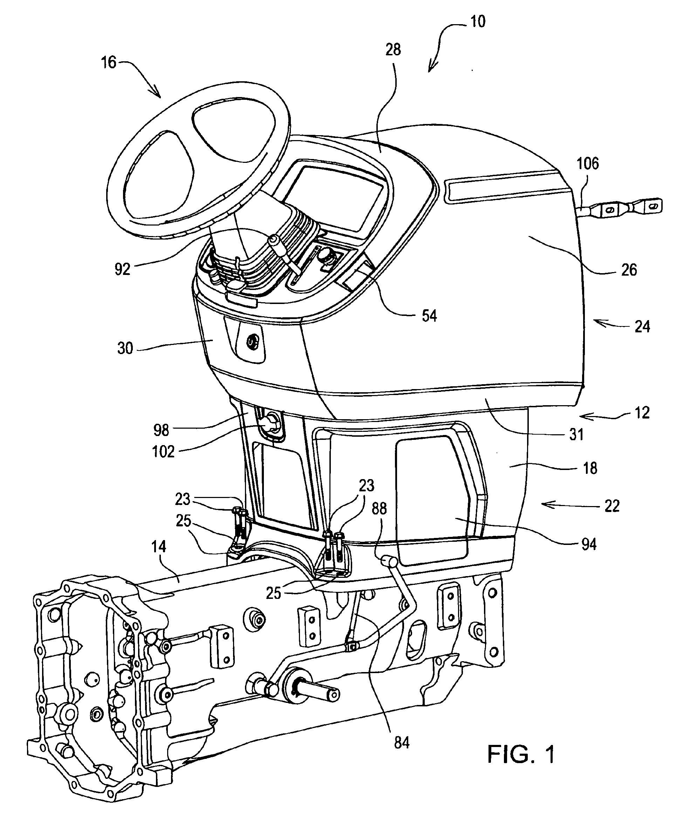

As shown in Fig. 1, a tractor center control console 10 includes an one-piece plastic pedestal 12 mounted to a transmission housing 14 of an utility tractor (not shown). The one-piece plastic pedestal 12 includes a pedestal base 22 which is secured to the transmission housing 14 (or alternatively, to a frame or floor) of the utility tractor using threaded fasteners 23 through mounting holes 25, and a pedestal head 24 supported by the pedestal base 22. The one-piece plastic pedestal 12 may be molded from a variety of different plastic materials having high strength and rigidity. A preferred plastic is 30% glass filled polypropylene with a blowing agent.

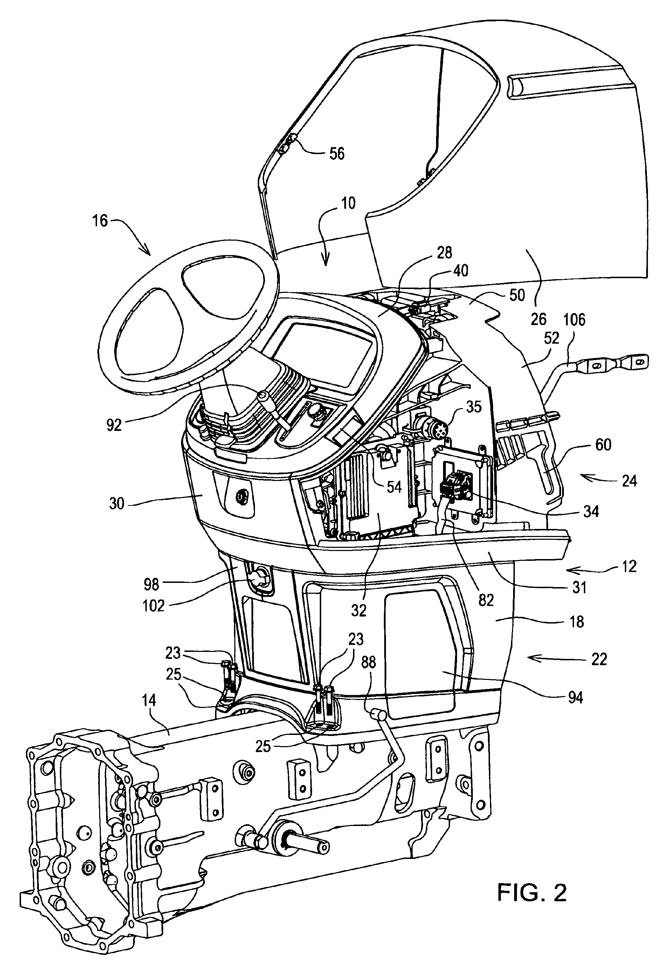

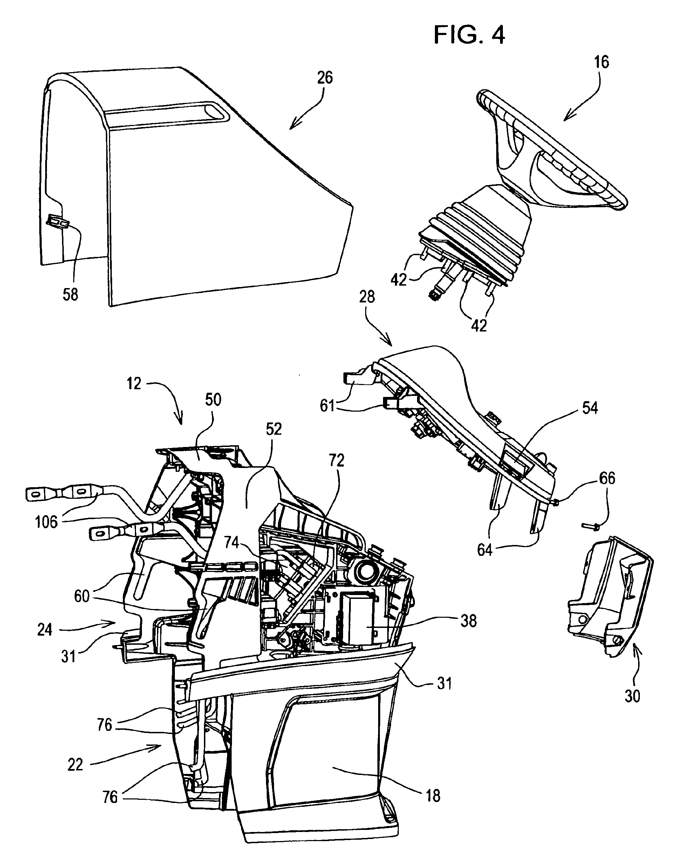

Furthermore, the tractor center control console 10 includes a cowl 26 covering the top and sides of the pedestal head 24. As shown in Fig. 2, cowl 26 may be removed from the pedestal head 24 without tools by squeezing pull latches 54 on both sides of an instrument panel to disengage them from fasteners 56, and sliding the cowl 26 upwardly until T-posts 58 (see Fig. 4) disengage mounting tracks 60. Cowl 26 rests on and is supported by top and side surfaces 50, 52 of the pedestal head 24. The pull latches 54 may be spring biased to engage fasteners 56 on the sides of cowl 26. Additionally, T-posts 58 facing inwardly from the sides of the cowl 26 slide into and engage mounting tracks 60 on the sides of the pedestal head 24. The T-posts 58 engage or disengage the mounting tracks 60 by sliding between wider upper ends and narrower lower ends of the mounting tracks 60.

Once cowl 26 is removed from pedestal head 24, components mounted to the pedestal head 24 and housed in pockets underneath the cowl 26 may be easily accessed and serviced. For example, as shown in Figs. 2 and 4, components mounted and housed in pockets in the pedestal head 24 include electronic engine control unit 32, electronic transmission control unit 34, electrical diagnostic port 35, fuse block 38 and DPF (diesel particulate filter) pressure switch 40. An operator may remove cowl 26 without using tools to access, service or replace each of the afore-mentioned components, and without removing any other components housed in the tractor center control console 10.

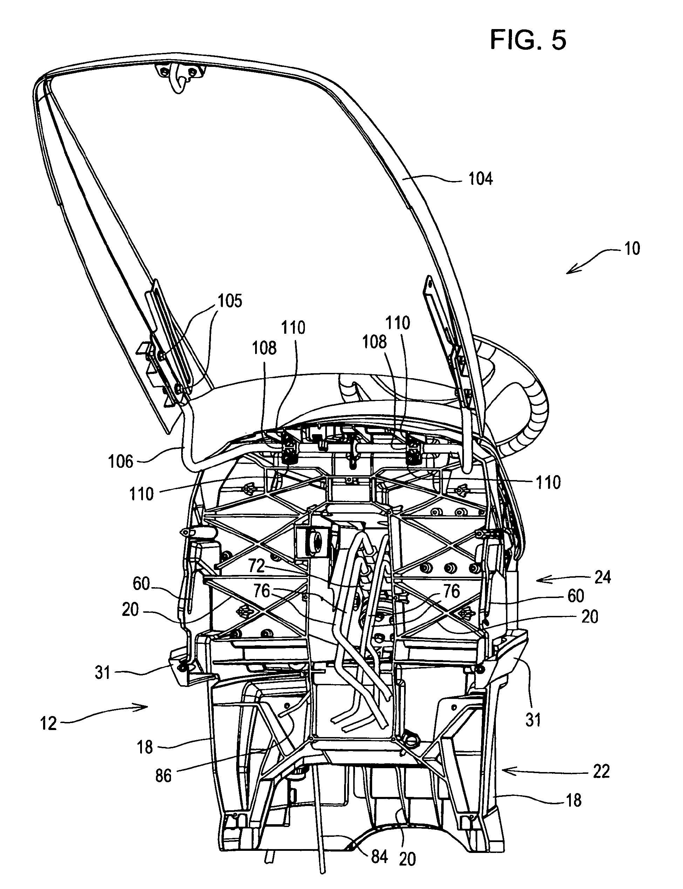

The one-piece plastic pedestal 12 has outer walls 18 with a wall thickness between about 5 mm and about 7 mm, and support ribs 20 having a wall thickness between about 2 mm and about 3 mm (see Fig. 5). The outer walls 18 and support ribs 20 form a honeycombed and ribbed support structure having a plurality of pockets. The tractor center control console 10 isolates the electronic and other components mounted in the pockets of the one-piece plastic pedestal 12 from the heat, moisture, dirt or other contaminants in the engine compartment. The outer walls 18 and supporting ribs 20 of the one-piece plastic pedestal 12 also provide a protective barrier and shield to block noise and vibration between the engine compartment and components mounted in the pockets of the one-piece plastic pedestal 12.

Furthermore, the one-piece plastic pedestal 12 provides the sole support structure for the steering column assembly 16 which is mounted thereto. The steering column assembly 16 is mounted to the pedestal head 24 at a position at least about 0.5 meters above the transmission housing 14 (or alternatively, a frame or floor) of the tractor. The outer walls 18 and supporting ribs 20 of the one-piece plastic pedestal 12 are configured to minimize deflection of the steering column assembly 16 without use of support castings, brackets or other additional support structures. Where the steering column assembly 16 is mounted to the pedestal head 24, side-to-side and/or front-to-back deflection of the one-piece plastic pedestal 12 may be limited to not more than about 20 mm in response to a load of 250 pounds (at 80 °C).

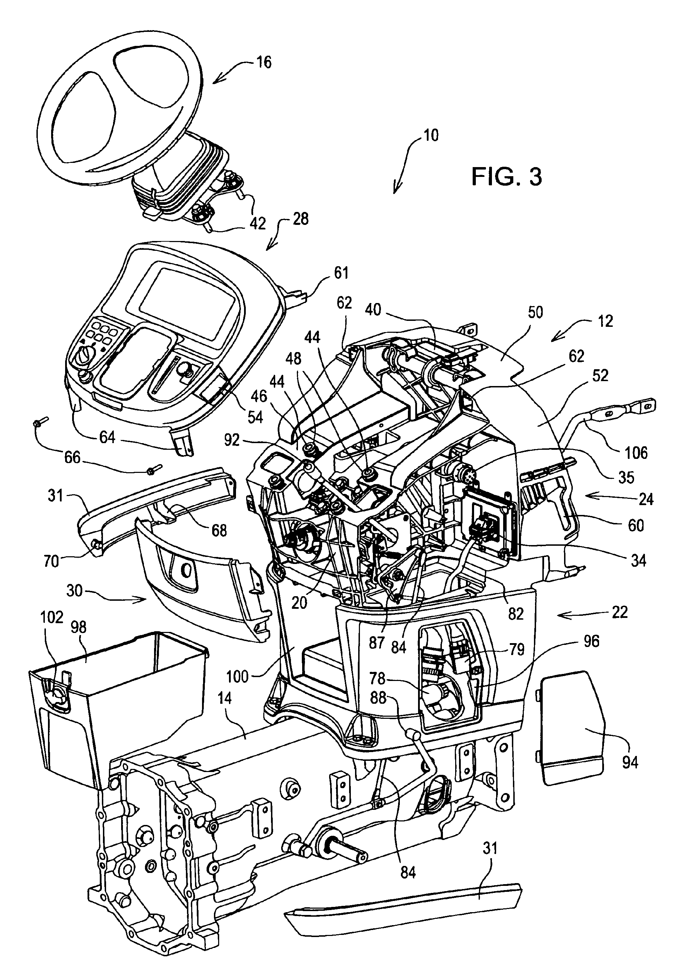

As shown in Figs. 3 and 4, steering column assembly 16 is mounted to the one-piece plastic pedestal 12 by inserting four threaded fasteners 42 through four mounting holes 44 in surface 46 on the pedestal head 24 which may be an inclined plane of between about 30 degrees and about 60 degrees from horizontal. Rubber or plastic isolators 48 are positioned around the threaded fasteners 42 between the steering column assembly 16 and the mounting holes 44. As shown in Figs. 4 and 5, steering valve 72 also may be mounted to the pedestal head 24 between steering column assembly 16 and hydraulic steering lines 76. After cowl 26 is removed, steering valve 72 may be accessed or serviced through opening 74 in the side of the pedestal head 24.

According to Figs. 3 and 4, the tractor center control console 10 also includes instrument panel 28, key switch panel 30 and trim panels 31. The edges of cowl 26 engage and/or abut the side and/or upper perimeter edges of instrument panel 28, key switch panel 30 and trim panels 31. The instrument panel 28 is removably attached to the pedestal head 24 using tabs 61 extending from the front or top edge of the instrument panel 28 that engage or are captured in slots 62 near the top of the pedestal head 24, and tabs 64 extending from lower or rear edge of the instrument panel 28 that may be secured to the pedestal head 24 with threaded fasteners 66. Optionally, threaded fasteners 66 also removably attach key switch panel 30 to the pedestal head 24. Trim panels 31 are removably attached to the key switch panel 30 and/or pedestal head 24 using tabs 68 and/or tinnerman clips 70.

Furthermore, the tractor center control console 10 includes electrical and/or mechanical connectors routed through pockets in the one-piece plastic pedestal 12 to interconnect the electronic components mounted and housed in or under the one-piece plastic pedestal 12. For example, Fig. 3 shows wiring harnesses 79 for the front and/or rear electronic components of the utility tractor extending into and through the pedestal base 22, and wiring harness 82 connected to transmission control unit 34. If the tractor has an electronic throttle, hand throttle 92 may be electrically connected to engine control unit 32, as shown in Fig. 2. If the tractor has a mechanical throttle, linkages such as wire forms 84, 86 may extend through pockets in the one-piece plastic pedestal 12 between throttle bell crank 87 and foot throttle pedal 88 and/or the tractor engine, as shown in Fig. 3.

The tractor center control console 10 includes one or more removable access panels to cover openings in outer walls 18 of the pedestal base 22. For example, transmission service panel 94 covers opening 96 in the outer wall 18 on the side of the pedestal base 22, and provides access to transmission components 78 and/or wiring harnesses 79 in or under the pedestal base 22 for service. Transmission service panel 94 is removable and/or hinged to cover opening 96. Additionally, one or more removable storage compartments are provided in the pedestal base 22, such as tool box 98 which may slide into and out from opening 100 in the pedestal base 22, and which may be closed and secured with latch 102.

As shown in Fig. 5, the tractor center control console 10 supports a hood hinge mechanism for a tractor hood 104. The tractor hood 104 is attached to the pedestal head 24 with threaded fasteners 105 to the opposing ends of wire form 106. The intermediate portion of the wire form 106 is pivotably attached to the pedestal head 24 with U-blocks 108 that are captured in molded-in features in the pedestal head 24, and secured with threaded fasteners 110 to provide a pivot axis for the hood hinge mechanism.

The tractor center control console 10 may be assembled before it is installed on the tractor. As assembled, the tractor center control console 10 may include the one-piece plastic pedestal 12 with the steering column assembly 16, instrument panel 28, key switch panel 30, electronic components, and hood hinge mechanism mounted thereto. The tractor center control console 10 may be mounted as an unit onto the tractor using threaded fasteners, wiring harnesses may be attached through the pedestal base 22 and pockets in the one-piece plastic pedestal 12, hydraulic steering lines 76 may be connected to the steering valve 72, and the tractor hood 104 may be attached to the hood hinge mechanism.

## Claims

1. A tractor center control console for supporting a steering column assembly comprising:
• a one-piece molded plastic pedestal (12);
• a steering column assembly (16) mounted to the one-piece plastic pedestal (12) and supported by the one-piece plastic pedestal (12);
• a removable cowl (26) covering at least part of the one-piece plastic pedestal (12);
• a plurality of electronic components (32, 34, 35, 38, 40) housed in the one-piece plastic pedestal (12) and covered by the removable cowl (26);
• the one-piece plastic pedestal (12) having a pedestal base (22) and a pedestal head (24);
• the cowl (26) being attached to and covering the pedestal head (24).

2. The tractor center control console according to claim 1, **characterized by** the pedestal head (24) having a plurality of pockets in which the electronic components (32, 34, 35, 38, 40) are mounted.

3. The tractor center control console according to claim 2, **characterized by** the cowl (26) being removable without tools to access and expose the electronic components (32, 34, 35, 38, 40) in the pockets.

4. The tractor center control console according to claim 1, **characterized by** a service panel (94) in the pedestal base (22) that is removable to provide access through the pedestal base (22).

5. The tractor center control console according to claim 1, **characterized by** a key switch panel (30) removably attached to the pedestal head (24).

6. The tractor center control console according to claim 1, **characterized by** an instrument panel (28) removably attached to the pedestal head (24).

7. The tractor center control console according to claim 1, **characterized by** a hood hinge mechanism attached to the pedestal head (22).

8. The tractor center control console according to claim 1, **characterized by** mounting tracks (60) in the side of the pedestal head (24), wherein the mounting tracks (60) are engagable by T-ports (58) on the cowl (26).

9. The tractor center control console according to claim 1, **characterized by** a tool box (98) removably attached to the pedestal base (22).

10. The tractor center control console according to claim 9, **characterized in that** the tool box (98) is slidably inserted into the pedestal base (22).

11. The tractor center control console according to claim 1, **characterized by** a steering valve (72) mounted to the pedestal head (24), wherein the steering valve (72) is accessible or serviceable through an opening (74) in the side of the pedestal head (24).

## Patentansprüche

1. Traktor-Mittelsteuerkonsole zur Unterstützung einer Lenksäulenanordnung, wobei die Konsole Folgendes umfasst:
• einen einteiligen geformten Kunststoffsockel (12);
• eine Lenksäulenanordnung (16), die an dem einteiligen Kunststoffsockel (12) angebracht ist und durch den einteiligen Kunststoffsockel (12) gestützt wird;
• eine abnehmbare Haube (26), die wenigstens einen Teil des einteiligen Kunststoffsockels (12) abdeckt;
• mehrere elektronische Bauteile (32, 34, 35, 38, 40), die in dem einteiligen Kunststoffsockel (12) untergebracht sind und durch die abnehmbare Haube (26) abgedeckt werden;
• wobei der einteilige Kunststoffsockel (12) eine Sockelbasis (22) und einen Sockelkopf (24) hat;
• wobei die Haube (26) an dem Sockelkopf (24) befestigt ist und denselben abdeckt.

2. Traktor-Mittelsteuerkonsole nach Anspruch 1, **dadurch gekennzeichnet, dass** der Sockelkopf (24) mehrere Fächer hat, in denen die elektronischen Bauteile (32, 34, 35, 38, 40) angebracht sind.

3. Traktor-Mittelsteuerkonsole nach Anspruch 2, **dadurch gekennzeichnet, dass** die Haube (26) ohne Werkzeuge abnehmbar ist, um auf die elektronischen Bauteile (32, 34, 35, 38, 40) in den Fächern zuzugreifen und sie freizulegen.

4. Traktor-Mittelsteuerkonsole nach Anspruch 1, **gekennzeichnet durch** eine Wartungsplatte (94) in der Sockelbasis (22), die abnehmbar ist, um einen Zugang **durch** die Sockelbasis (22) zu gewähren.

5. Traktor-Mittelsteuerkonsole nach Anspruch 1, **gekennzeichnet durch** eine Schlüsselschalttafel (30), die abnehmbar an dem Sockelkopf (24) befestigt ist.

6. Traktor-Mittelsteuerkonsole nach Anspruch 1, **gekennzeichnet durch** eine Instrumententafel (28), die abnehmbar an dem Sockelkopf (24) befestigt ist.

7. Traktor-Mittelsteuerkonsole nach Anspruch 1, **gekennzeichnet durch** einen Haubenscharniermechanismus, der an dem Sockelkopf (24) befestigt ist.

8. Traktor-Mittelsteuerkonsole nach Anspruch 1, **gekennzeichnet durch** Montageschienen (60) in der Seite des Sockelkopfs (24), wobei die Montageschienen (60) **durch** T-Anschlüsse (58) an der Haube (26) in Eingriff genommen werden können.

9. Traktor-Mittelsteuerkonsole nach Anspruch 1, **gekennzeichnet durch** einen Werkzeugkasten (98), der abnehmbar an der Sockelbasis (22) befestigt ist.

10. Traktor-Mittelsteuerkonsole nach Anspruch 9, **dadurch gekennzeichnet, dass** der Werkzeugkasten (98) verschiebbar in die Sockelbasis (22) eingesetzt wird.

11. Traktor-Mittelsteuerkonsole nach Anspruch 1, **gekennzeichnet durch** ein Lenkventil (72), das an dem Sockelkopf (24) angebracht ist, wobei das Lenkventil (72) **durch** eine Öffnung (74) in der Seite des Sockelkopfs (24) zugänglich oder zu warten ist.

## Revendications

1. Console de commande centrale de tracteur destinée à supporter un ensemble de colonne de direction, comprenant :
- un socle en plastique moulé d'une seule pièce (12) ;
- un ensemble de colonne de direction (16) monté sur le socle en plastique d'une seule pièce (12) et supporté par le socle en plastique d'une seule pièce (12) ;
- un capot amovible (26) couvrant au moins une partie du socle en plastique d'une seule pièce (12) ;
- une pluralité de composants électroniques (32, 34, 35, 38, 40) reçus dans le socle en plastique d'une seule pièce (12) et couverts par le capot amovible (26) ;
- le socle en plastique d'une seule pièce (12) ayant une base de socle (22) et une tête de socle (24) ;
- le capot (26) étant attaché à la tête de socle (24) et la recouvrant.

2. Console de commande centrale de tracteur selon la revendication 1, **caractérisée en ce que** la tête de socle (24) présente une pluralité de cavités dans lesquelles sont montés les composants électroniques (32, 34, 35, 38, 40).

3. Console de commande centrale de tracteur selon la revendication 2, **caractérisée en ce que** le capot (26) peut être enlevé sans outil afin d'accéder aux composants électroniques (32, 34, 35, 38, 40) dans les cavités et de les exposer.

4. Console de commande centrale de tracteur selon la revendication 1, **caractérisée par** un panneau de service (94) dans la base de socle (22), qui peut être enlevé pour permettre l'accès à travers la base de socle (22).

5. Console de commande centrale de tracteur selon la revendication 1, **caractérisée par** un panneau de commutation à clé (30) attaché de manière amovible à la tête de socle (24).

6. Console de commande centrale de tracteur selon la revendication 1, **caractérisée par** un panneau d'instruments (28) attaché de manière amovible à la tête de socle (24).

7. Console de commande centrale de tracteur selon la revendication 1, **caractérisée par** un mécanisme d'articulation de couvercle attaché à la tête de socle (24) .

8. Console de commande centrale de tracteur selon la revendication 1, **caractérisée par** des rails de montage (60) dans le côté de la tête de socle (24), les rails de montage (60) pouvant être mis en prise par des orifices en forme de T (58) sur le capot (26).

9. Console de commande centrale de tracteur selon la revendication 1, **caractérisée par** une boîte à outils (98) attaché de manière amovible à la base de socle (22).

10. Console de commande centrale de tracteur selon la revendication 9, **caractérisée en ce que** la boîte à outils (98) est insérée de manière coulissante dans la base de socle (22).

11. Console de commande centrale de tracteur selon la revendication 1, **caractérisée par** une vanne de direction (72) montée sur la tête de socle (24), la vanne de direction (72) pouvant être accessible ou entretenue à travers une ouverture (74) dans le côté de la tête de socle (24).
